# EUROPÄISCHE PATENTSCHRIFT

(11) **EP 3 069 481 B1**
(45) Veröffentlichungstag und Bekanntmachung des Hinweises auf die Patenterteilung: **22.03.2017**
(21) Anmeldenummer: 14796085.0
(22) Anmeldetag: 10.11.2014
(51) Int. Cl.: H04L 12/403, H04L 12/66

(54) **VERFAHREN ZUR KOMMUNIKATION VON SYSTEMSTEUERUNGSEINHEITEN MIT EINER MEHRZAHL VON ENERGIEERZEUGUNGSANLAGEN ÜBER EIN GATEWAY UND ENTSPRECHEND KONFIGURIERTER UND PROGRAMMIERTER DATENSERVER**
METHOD FOR THE COMMUNICATION OF SYSTEM CONTROL UNITS WITH A PLURALITY OF ENERGY GENERATING SYSTEMS VIA A GATEWAY, AND CORRESPONDINGLY CONFIGURED AND PROGRAMMED DATA SERVER
PROCÉDÉ DE COMMUNICATION ENTRE DES MODULES DE COMMANDE SYSTÈME ET UNE PLURALITÉ D'INSTALLATIONS DE PRODUCTION D'ÉNERGIE PAR L'INTERMÉDIAIRE D'UNE PASSERELLE ET SERVEUR DE DONNÉES CONFIGURÉ ET PROGRAMMÉ EN CONSÉQUENCE

(30) Priorität: 12.11.2013 DE 102013112408
(43) Veröffentlichungstag der Anmeldung: 21.09.2016
(73) Patentinhaber: SMA Solar Technology AG, 34266 Niestetal (DE)
(72) Erfinder: THIEL, Raimund, 34596 Bad Zwesten (DE); SCHLOTE, Dirk, 34121 Kassel (DE); ENGELHARD, Georg, 34266 Niestetal (DE)
(86) Internationale Anmeldenummer: PCT/EP2014/074123
(87) Internationale Veröffentlichungsnummer: WO 2015/071202

(56) Entgegenhaltungen:
- WO-A1-2009/029862
- WO-A1-2011/134048
- US-A1- 2009 007 227
- US-A1- 2012 151 086

## Beschreibung

### TECHNISCHES GEBIET DER ERFINDUNG

Die Erfindung bezieht sich auf ein Verfahren zur Kommunikation von Systemsteuerungseinheiten mit einer Mehrzahl von räumlich verteilten Energieerzeugungsanlagen, die gemeinsam in ein zusammenhängendes Versorgungsnetz für elektrische Energie einspeisen. Insbesondere bezieht sich die vorliegende Erfindung auf ein solches Verfahren mit den Merkmalen des Oberbegriffs des unabhängigen Patentanspruchs 1. Weiterhin bezieht sich die Erfindung auf eine Implementation eines solchen Verfahrens durch einen entsprechend konfigurierten und programmierten Datenserver.

### STAND DER TECHNIK

Ein Verfahren mit den Merkmalen des Oberbegriffs des unabhängigen Patentanspruchs 1 ist aus der WO 2010/058013 A2 bekannt. Die WO 2010/058013 A2 offenbart ein Verfahren zum Weiterleiten von Betriebsdaten, die sich auf den aktuellen Betrieb einer Mehrzahl von Wechselrichtereinheiten beziehen, an eine Überwachungseinheit. Die Wechselrichtereinheiten speisen elektrische Leistung in ein Versorgungsnetz ein. Bei dem bekannten Verfahren werden die Wechselrichtereinheiten über eine Mehrzahl von zwischengeordneten Datenhandhabungseinheiten in einem Netzwerk von logischer Baumarchitektur an die zentrale Überwachungseinheit angeschlossen. Die Betriebsdaten werden von jeder Wechselrichtereinheit an die zwischengeschaltete Einheit weitergeleitet, an die die Wechselrichtereinheit angeschlossen ist. In jeder zwischengeschalteten Einheit, die die Betriebsdaten weiterleitet, werden Betriebsdaten vom gleichen Typ zusammengefasst, um das Datenvolumen zu reduzieren. Nur die zusammengefassten Betriebsdaten werden weitergeleitet. Das Weiterleiten der Betriebsdaten zu der zentralen Einheit kann durch eine generische Anfrage initiiert werden, die von der Überwachungseinheit ausgegeben wird und die angibt, dass jede Einheit in dem Kommunikationsnetzwerk, die in der Lage ist, die angeforderten Betriebsdaten zu liefern, dies tun sollte. Die Betriebsdaten können auch aufgrund eines Abonnements der Betriebsdaten regelmäßig von einer Einheit zu der nächsten in dem Kommunikationsnetzwerk zu der Überwachungseinheit hin weitergeleitet werden. An das Kommunikationsnetzwerk kann auch eine weitere Überwachungseinheit angeschlossen werden. In einer Datenhandhabungseinheit, die als zwischengeschaltete Einheit bei diesem bekannten Verfahren verwendbar ist, werden bereits vorliegende Betriebsdaten verwaltet. Die Datenhandhabungseinheit weist einen Anschlussport für das Empfangen von Anfragen nach Werten von einer übergeordneten Einheit sowie für das Weiterleiten der angeforderten Betriebsdaten an die übergeordnete Einheit und einen weiteren Anschlussport für das Senden von Anfragedaten nach Werten an eine Mehrzahl von untergeordneten Einheiten sowie für das Empfangen der angefragten Betriebsdaten von den untergeordneten Einheiten auf. Die Anfragen nach Betriebsdaten und das Weiterleiten der angefragten Betriebsdaten erfolgt bei dem bekannten Verfahren über alle Ebenen des Kommunikationsnetzwerks hinweg nach einem speziellen Protokoll, das es ermöglicht, Betriebsdaten desselben Typs, die von der Mehrzahl der Wechselrichtereinheiten weitergeleitet werden, zusammenzufassen, ohne das Datenmodell der Daten zu verändern.

Das aus der WO 2010/058013 A2 bekannte Verfahren ist nur zur Kommunikation zwischen speziell für dieses Verfahren hergerichteten Wechselrichtereinheiten, Datenhandhabungseinheiten und Überwachungseinheiten geeignet.

Aus der DE 10 2012 109 060 A1 ist ein Verfahren zur Kommunikation mit dezentralen, elektrische Energie handhabenden Einrichtungen über das Internet bekannt. Bei diesem bekannten Verfahren werden von den Einrichtungen und von potentiellen Kommunikationspartnern der Einrichtungen Daten über das Internet an einen Server übermittelt, die jeweils eine Kommunikationsadresse und weiterhin generische Eigenschaften der Einrichtungen und der Kommunikationspartner angebende Attribute umfassen. Der Server stellt als Reaktion auf ein initialisierendes zeitvariables Datum eine Kommunikationsverbindung zwischen mindestens einer bestimmten Einrichtung und mindestens einem bestimmten Kommunikationspartner über das Internet her. Dazu sind in dem Server Regeln programmiert, die basierend auf den Attributen der Einrichtungen und der Kommunikationspartner und dem initialisierenden zeitvariablen Datum festlegen, zwischen welcher Einrichtung und welchem Kommunikationspartner die Kommunikationsverbindung hergestellt wird. Bei der Kommunikationsverbindung kann es sich um eine Punkt-zu-Punkt-, eine Punkt-zu-Mehrpunkt- oder eine Mehrpunkt-zu-Mehrpunkt-Verbindung handeln.

Auch das aus der DE 10 2012 109 060 A1 bekannte Verfahren setzt für eine erfolgreiche Kommunikation zwischen den jeweiligen Einrichtungen und deren Kommunikationspartnern voraus, dass diese für einen direkten Datenaustausch untereinander geeignet sind.

Aus der DE 10 2007 022 879 A1 ist ein Wechselrichter zur Netzeinspeisung in ein Wechselstromnetz bekannt, der eingangsseitig mit einem elektrische Energie erzeugenden Generator verbindbar ist und eine Datenverbindung zu einem Datennetzwerk aufweist, an das eine Vielzahl weiterer Wechselrichter mit weiteren Stromerzeugern zur Stromeinspeisung in das Wechselstromnetz angeschlossen ist. Das Datennetzwerk bildet mit den angeschlossenen Wechselrichtern eine Kommunikationseinheit, wobei die einzelnen Wechselrichter durch eine Steuereinheit über das Datennetzwerk so gesteuert werden, dass eine bezüglich Einspeiseparameter einheitliche Kraftwerkseinheit vorhanden ist. Diese Kraftwerkseinheit kann in einem Stromverbund als externe Einheit mit zusammengefasster Kontroll- und Steuerungsstruktur angeschlossen sein. Sie wird auch als virtuelles Kraftwerk bezeichnet. Ein solches virtuelles Kraftwerk setzt jedoch die Eignung aller zugehörigen Wechselrichter voraus, so an das Datennetzwerk angeschlossen zu werden, dass sie über das Datennetzwerk von der Steuereinheit steuerbar sind.

Aus der WO 2011/116770 A2 sind ein Verfahren und ein System zum Bereitstellen von Daten von einer untergeordneten Einrichtung ein einen übergeordneten Computer bekannt, der an die untergeordnete Einrichtung angeschlossen ist. Dabei wird ein Datenstrom zwischen der untergeordneten Einrichtung und dem übergeordneten Computer von einem niedrigen Datenformat in dem übergeordneten Computer in ein höheres Datenformat übersetzt. Die Übersetzungsfunktion weist statische Daten auf, die sich auf die untergeordnete Einrichtung beziehen. Das höhere Datenformat wird verwendet, um Daten von der untergeordneten Einrichtung an dem übergeordneten Computer anzuzeigen. So kann auf die Daten von der untergeordneten Einrichtung über die Kommunikationsschnittstellen des übergeordneten Computers zugegriffen werden.

Die US 2012/0151086 A1 offenbart ein inhaltsorientiertes Kommunikationsnetzwerk, das einen Eingangs-Gateway in Kommunikation mit einem Legacy-Client eines ersten Legacy-Kommunikationsnetzwerks und ein Ausgangs-Gateway in Kommunikation mit dem Eingangs-Gateway und einem Legacy-Server eines zweiten Legacy-Kommunikationsnetzwerks umfasst. Der Eingangs-Gateway übersetzt eine Inhaltsanforderung des Legacy-Client von einem ersten Legacy-Protokoll in ein inhaltsorientiertes Protokoll und übersetzt eine Inhaltsantwort als Antwort auf die Inhaltsanforderung, von dem inhaltsorientierten Protokoll in das erste Legacy-Protokoll. Der Ausgangs-Gateway übersetzt die Inhaltsanforderung von dem inhaltsorientierten Protokoll in ein zweites Legacy-Protokoll und übersetzt die als Antwort auf die Inhaltsanforderung empfangene Inhaltsantwort von dem zweiten Legacy-Protokoll in das inhaltsorientierte Protokoll.

Aus A. Naumann, B.-M. Buchholz, P. Komarnicki, Ch. Brunner: "Seamless data communication over all levels of the power system"; CIRED, Proceeding of the 21st International Conference and Exhibition on Electricity Distribution, Frankfurt am Main, 6.-9. Juni 2011 (http://www.cired.net/publications/cired2011/part1/papers/CIRED2011_0988_final.pdf) ist ein Verfahren zur Kommunikation innerhalb eines Energieversorgungssystems mit einer Mehrzahl von räumlich verteilten Energieerzeugungsanlagen, um ein virtuelles Kraftwerk auszubilden, bekannt. Um dem Problem verschiedener Kommunikationsprotokolle und Informationssysteme, die keinen nahtlosen Informationsaustausch zwischen den verschiedenen Niveaus des Energieversorgungssystems ermöglichen, zu begegnen, wird ein homogenes Protokoll zwischen und innerhalb aller Niveaus des Energieversorgungssystems beschrieben. Einheiten, wie Messgeräte und Automationseinrichtungen, die dieses homogene Protokoll selbst nicht verwenden, werden mit Gateways versehen, um auch mit ihnen über das homogene Protokoll kommunizieren zu können. Auch mit einem gemeinsamen Informationsmodell, das intern einem anderen Standard folgt, kommunizieren alle Einheiten über das homogene Protokoll, dessen Werte auf die entsprechenden Attribute des Standards des gemeinsamen Informationsmodells abgebildet werden.

Die zunehmende Verbreitung von dezentralen Energieerzeugungsanlagen, die an verschiedenen Punkten an ein Versorgungsnetz für elektrische Energie angeschlossen sind, macht eine Überwachung und Beeinflussung von Parametern eines solchen Versorgungsnetzes und insbesondere die zielgerichtete konzertierte Steuerung aller oder zumindest aller wesentlichen Energieerzeugungsanlagen, die an das Versorgungsnetz angeschlossen sind, zunehmend schwierig. Diese Schwierigkeiten wachsen mit der Anzahl der Datenmodelle, in denen die Energieerzeugungsanlagen ihre Betriebsdaten ausgeben, stark an. Dies gilt insbesondere dann, wenn mehrere Systemsteuerungseinheiten vorhanden sind, die parallel Anlagendaten von den Energieerzeugungsanlagen anfragen und/oder auf den Betrieb der Energieerzeugungsanlagen Einfluss nehmen wollen. Ein Beispiel für parallele Eingriffe von zwei Systemsteuerungseinheiten ist eine Netzleitstelle, die darauf bedacht ist, das Angebot von elektrischer Leistung und den Verbrauch von elektrischer Leistung über das gesamte Versorgungsnetz auszugleichen, und eine lokale Überwachungseinrichtung, die darauf bedacht ist, bestimmte Netzparameter an bestimmten Punkten des Versorgungsnetzes einzuhalten. Dabei kann es für das Einhalten dieser Netzparameter auf ein lokales Gleichgewicht von Angebot und Nachfrage elektrischer Leistung ankommen, das auch dann gestört sein kann, wenn das Angebot an und die Nachfrage nach elektrischer Leistung in dem Versorgungsnetz insgesamt ausgeglichen sind.

Aktuell wird erheblicher Aufwand betrieben, um Energieerzeugungsanlagen zur Kommunikation mit verschiedenen Systemsteuerungseinheiten zu ertüchtigen. Hierzu werden die Energieerzeugungsanlagen aufwändig mit verschiedenen Schnittstellen versehen, die an die potentiellen Schnittstellen der Systemsteuerungseinheiten angepasst sind. Selbst wenn an einer Energieerzeugungsanlage viele verschiedene Schnittstellen eingerichtet wurden, ist es über die geplante lange Lebensdauer einer Energieerzeugungsanlage aber dennoch wahrscheinlich, dass sie für eine neue Systemsteuerungseinheit, die ein neueres Datenmodell verwendet, keine passende Schnittstelle aufweist.

### AUFGABE DER ERFINDUNG

Der Erfindung liegt die Aufgabe zugrunde, ein Verfahren zur Kommunikation von Systemsteuerungseinheiten mit einer Mehrzahl von räumlich verteilten Energieerzeugungsanlagen, die gemeinsam in ein zusammenhängendes Versorgungsnetz für elektrische Energie einspeisen, aufzuzeigen, das nur geringe Anforderungen an die beteiligten Systemsteuerungseinheiten und Energieerzeugungsanlagen stellt und dennoch eine hohe Funktionalität aufweist.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen 2 bis 15 definiert. Der Patentanspruch 16 ist auf einen Datenserver gerichtet, der konfiguriert und programmiert ist, um das erfindungsgemäße Verfahren auszuführen.

### BESCHREIBUNG DER ERFINDUNG

Die Erfindung geht aus von einem Verfahren zur Kommunikation von Systemsteuerungseinheiten mit einer Mehrzahl von räumlich verteilten Energieerzeugungsanlagen, die gemeinsam in ein zusammenhängendes Versorgungsnetz für elektrische Energie einspeisen, wobei Anfragedaten von den Systemsteuerungseinheiten und Anlagendaten von den Energieerzeugungseinheiten an einem gemeinsamen Gateway empfangen werden, wobei die Anlagendaten in dem Gateway verwaltet und die Anfragedaten in dem Gateway verarbeitet werden und wobei von dem Gateway Steuerbefehle an die Energieerzeugungsanlagen und Datenantworten an die Systemsteuerungseinheiten versandt werden, die aus dem Verarbeiten der Anfragedaten resultieren.

Erfindungsgemäß werden bei einem solchen Verfahren die Anfragedaten in mindestens zwei verschiedenen Datenmodellen der einzelnen Systemsteuerungseinheiten und/oder die Anlagendaten in mindestens zwei verschiedenen Datenmodellen der einzelnen Energieerzeugungsanlagen an dem Gateway empfangen. Das heißt, jede Systemsteuerungseinheit und jede Energieerzeugungsanlage sendet ihre Anfragedaten bzw. Anlagendaten in irgendeinem Datenmodell, wobei mindestens zwei verschiedene Datenmodelle auf Seiten der Systemsteuerungseinheiten und/oder der Energieerzeugungsanlagen verwendet werden. Zusätzlich können sich auch die Datenmodelle der Systemsteuerungseinheiten einerseits und die Datenmodelle der Energieerzeugungsanlagen andererseits unterscheiden. Für das erfindungsgemäße Verfahren müssen daher an den einzelnen Systemsteuerungseinheiten und Energieerzeugungsanlagen keine Vorkehrungen für ein übereinstimmendes Datenmodell aller Systemsteuerungseinheiten und Energieerzeugungsanlagen getroffen werden.

Vielmehr werden die Anfragedaten und die Anlagendaten bei dem erfindungsgemäßen Verfahren in dem Gateway aus ihren jeweiligen Datenmodellen in ein Metadatenmodell übersetzt. Die Verwaltung der Anlagendaten und die Verarbeitung der Anfragedaten in dem Gateway erfolgt in diesem Metadatenmodell. Hieraus resultieren Datenantworten an bestimmte Systemsteuerungseinheiten und/oder Steuerbefehle an bestimmte Energieerzeugungsanlagen in dem Metadatenmodell. Diese Datenantworten und/oder Steuerbefehle werden in dem Gateway aus dem Metadatenmodell in die Datenmodelle der bestimmten Systemsteuerungseinheiten und/oder Energieerzeugungsanlagen übersetzt. Erst diese übersetzten Datenantworten und/oder Steuerbefehle werden von dem Gateway an die bestimmten Systemsteuerungseinheiten und/oder Energieerzeugungsanlagen übersandt. Bei dem erfindungsgemäßen Verfahren kommuniziert das Gateway also mit jeder angeschlossenen Systemsteuerungseinheit und jeder angeschlossenen Energieerzeugungsanlage über einen Übersetzer in das bzw. aus dem Metadatenmodell. Alle darüber hinausgehenden Aktivitäten des Gateways bei dem erfindungsgemäßen Verfahren erfolgen in dem Metadatenmodell, d. h. in einer einheitlichen Sprache, ganz unabhängig davon, von welcher Systemsteuerungseinheit bzw. welcher Energieerzeugungsanlage die dabei berücksichtigten Anfragedaten bzw. Anlagendaten stammen und in welchem Datenmodell sie an das Gateway übermittelt wurden.

Es versteht sich, dass das Metadatenmodell so zu konzipieren ist, dass alle Datenpunkte in allen Datenmodellen, in denen Daten an dem Gateway empfangen werden, bei der Übersetzung in das Metadatenmodell abgebildet werden können. Vorzugsweise wird jeder Datenpunkt aus jedem Datenmodell in genau einen Datenpunkt in dem Metadatenmodell abgebildet. Dies ist aber nicht zwingend, weil auch eine Abbildung in mehrere Datenpunkte des Metadatenmodells möglich ist. Umgekehrt müssen die Datenmodelle nicht dazu in der Lage sein, dass alle Datenpunkte aus dem Metadatenmodell in das jeweilige Datenmodell abgebildet werden können.

Die Einbindung einer neuen Systemsteuerungseinheit oder einer neuen Energieerzeugungsanlage in diese Kommunikation erfordert selbst dann, wenn diese Systemsteuerungseinheit bzw. Energieerzeugungsanlage ein anderes Datenmodell als alle bisherigen Systemsteuerungseinheiten bzw. Energieerzeugungsanlagen verwendet, nur einen einzigen zusätzlichen Übersetzer in das bzw. aus dem gemeinsamen Metadatenmodell. Es müssen nicht etwa zusätzliche Übersetzer von dem neuen Datenmodell in alle schon bislang verwendeten Datenmodelle und zurück eingerichtet werden. Auch neue Datenmodelle können so mit geringem Aufwand Berücksichtigung finden; und diese Berücksichtigung ist nur an der zentralen Stelle des Gateway erforderlich, nicht an den einzelnen Systemsteuerungseinheiten und Energieerzeugungsanlagen, die über das Gateway miteinander kommunizieren.

Die Anfragedaten und Anlagendaten von den verschiedenen Systemsteuerungseinheiten bzw. Energieerzeugungsanlagen und entsprechend die Datenantworten und Steuerbefehle an die verschiedenen Systemsteuerungseinheiten bzw. Energieerzeugungsanlagen können sich neben ihren Datenmodellen auch in den bei ihrer Übermittlung verwendeten Kommunikationsprotokollen und/oder Kommunikationswegen unterscheiden. Die Unterschiede können so weit gehen, dass unterschiedliche physikalische Datenports zur Kommunikation erforderlich sind. Umgekehrt können auch Daten in unterschiedlichen Datenmodellen gemäß denselben Kommunikationsprotokollen und auf denselben Kommunikationswegen, d. h. insbesondere über dieselben Datenports übermittelt werden.

Bei dem erfindungsgemäßen Verfahren kommt eine sternförmige Kommunikationsstruktur mit dem Gateway im Zentrum des Sterns zur Anwendung.

Vorzugsweise wird bei dem erfindungsgemäßen Verfahren in dem Gateway ein Netzmodell des Versorgungsnetzes und der einspeisenden Energieerzeugungsanlagen beim Verarbeiten der übersetzten Anfragedaten in dem Gateway berücksichtigt. Ohne ein solches Netzmodell müssen die Anlagendaten die Zuordnung der Energieerzeugungsanlagen zu bestimmten Bereichen des Versorgungsnetzes soweit abbilden, wie dies für das Abarbeiten der Anfragedaten von den Systemsteuerungseinheiten erforderlich ist.

Wenn ein Netzmodell des Versorgungsnetzes in dem Gateway Verwendung findet, wird es vorzugsweise gepflegt, d. h. nach seiner Einrichtung bedarfsweise aktualisiert.

Das Gateway kann bei dem erfindungsgemäßen Verfahren eigenständig Steuerbefehle an die Energieerzeugungsanlagen übersenden, auch ohne dass Anfragedaten vorliegen, um Anlagendaten von den Energieerzeugungsanlagen anzufordern. Diese Anlagendaten können dann z. B. verwendet werden, um das Netzmodell des Versorgungsnetzes in dem Gateway zu pflegen. Eine andere Verwendungsmöglichkeit derart angeforderter Anlagendaten besteht darin, schnell auf Anfragedaten nach bestimmten aktuellen Betriebsparametern von den Systemsteuerungseinheiten reagieren zu können, ohne diese Betriebsparameter erst in Form von Anlagendaten von den einzelnen Energieerzeugungsanlagen auf solche Anfragedaten hin anfordern zu müssen.

An dieser Stelle sei angemerkt, dass die Verwendung des Begriffs "Systemsteuerungseinheit" hier nicht bedeutet, dass jede der Systemsteuerungseinheiten Anfragedaten aussendet, die steuernde Auswirkungen auf die Energieerzeugungsanlagen haben. Einzelne oder sogar alle Systemsteuerungseinheiten können sich auch darauf beschränken, Zustands- und/oder Anlagendaten abzufragen. Dementsprechend kann mit einem "Senden von Anfragedaten" von einer Systemsteuerungseinheit einerseits der Zweck verfolgt werden, Zustands- oder Anlagendaten der Energieerzeugungsanlagen zu erfragen. Andererseits kann hiermit der Zweck verfolgt werden, den aktuellen Betriebszustand aller oder einzelner der angesprochenen Energieerzeugungsanlagen steuernd zu beeinflussen. Der erste Fall kennzeichnet somit eine "Leseanfrage", während der zweite Fall eine "Schreibanfrage" seitens der Systemsteuerungseinheit kennzeichnet.

Ebenso können die Steuerbefehle, die von dem Gateway an die Energieerzeugungsanlagen übersandt werden, neben Befehlen in Hinblick auf eine bestimmte Betriebsweise der Energieerzeugungsanlagen auch nur auf eine Übermittlung von Anlagendaten gerichtet sein.

An dem Gateway können bei dem erfindungsgemäßen Verfahren weiterhin Zustandsdaten von Messeinrichtungen empfangen werden. Diese Zustandsdaten können dann in dem Gateway aus ihren jeweiligen Datenmodellen in das Metadatenmodell übersetzt werden, und die übersetzten Zustandsdaten können zusätzlich in dem Gateway verwaltet werden. Die Zustandsdaten können neben den Anlagendaten in die von dem Gateway formulierten und übersandten Datenantworten eingehen und insbesondere auch dazu genutzt werden, zu überprüfen, ob von dem Gateway übersandte Steuerbefehle einen gewünschten Effekt hatten. Gleichfalls ist es möglich, dass das Gateway Wetterprognosedaten empfängt und diese zum Zwecke der Steuerung der Energieerzeugungsanlagen oder auch zur Information der Systemsteuerungseinheiten nutzt. So kann es sinnvoll sein, eine übergeordnete Systemsteuerungseinheit über zukünftig erwartete Änderungen der Energieeinspeisung einzelner Energieerzeugungsanlagen zu informieren, damit diese ausreichend zeitlichen Vorlauf hat - beispielsweise im Hinblick auf ein zeitaufwändiges Auf- bzw. Abregeln herkömmlicher Kraftwerke zur Energieerzeugung -, um netzstützend eingreifen zu können. Auch eine kombinierte Aufregelung eines herkömmlichen Kraftwerks zur Energieerzeugung mit einer simultan erfolgenden entgegengesetzt gerichteten Abregelung einzelner dezentraler Energieerzeugungsanlagen, die an das gleiche Energieversorgungsnetz angeschlossen sind, ist mit dem Ziel möglich, die insgesamt eingespeiste Leistung - zumindest über die Dauer der Regelung - möglichst konstant zu halten. Auf diese Weise kann bei einer natürlichen Schwankung der eingespeisten Leistung mehrerer Energieerzeugungsanlagen aufgrund von Wetteränderungen in deren Bereich im Vorfeld netzstützend eingegriffen werden.

Aus Anfragedaten resultierende Steuerbefehle können von dem Gateway bei dem erfindungsgemäßen Verfahren in einer zeitlichen Abfolge übersandt werden. So kann beispielsweise zunächst ein Steuerbefehl an bestimmte Energieerzeugungsanlagen übersandt werden, um von dort bestimmte Betriebsparameter abzufragen. Sobald diese Betriebsparameter in Form von Anlagendaten von diesen Energieerzeugungsanlagen erhalten wurden, kann das Gateway hieraus eine Datenantwort formulieren, die dann an die anfragende Systemsteuerungseinheit übersandt wird. Das Gateway kann bei dem erfindungsgemäßen Verfahren bestimmte Steuerbefehle auch einmal oder mehrfach wiederholen, um das Erreichen eines bestimmten Ziels, das durch empfangene Anfragedaten gesetzt wurde, sicherzustellen. So kann im Falle eines Überangebots an elektrischer Leistung an einem bestimmten Punkt des Versorgungsnetzes von den in der Nähe dieses Punkts an das Versorgungsnetz angeschlossenen Energieerzeugungsanlagen verlangt werden, die von ihnen in das Versorgungsnetz eingespeiste Leistung gegenüber ihrer zuletzt eingespeisten Leistung um einen bestimmten Prozentsatz zu reduzieren. Die entsprechenden Steuerbefehle können so oft wiederholt und/oder - beispielsweise aufgrund aktualisierter Zustandsdaten - modifiziert werden, bis das Überangebot an elektrischer Leistung an dem Punkt beseitigt ist. Weiterhin können Steuerbefehle an Energieerzeugungsanlagen wiederholt werden, die nach bestimmter Zeit automatisch in ihren ursprünglichen Betriebszustand zurückfallen.

Von dem Gateway können auch selbstständig Steuerbefehle an die Energieerzeugungsanlagen generiert werden, um ein in dem Gateway hinterlegtes Ziel und/oder ein in den Anfragedaten der Systemsteuerungseinheiten definiertes globales Ziel zu verfolgen. Bei dem globalen Ziel kann es sich zum Beispiel um eine Abregelung auf x% der maximal möglichen Einspeiseleistung eines virtuellen Kraftwerks aus mehreren der Energieerzeugungsanlagen handeln. Hierzu muss fortlaufend der aktuelle Wert der maximal möglichen Einspeiseleistung bestimmt werden und das virtuelle Kraftwerk aus den mehreren Energieerzeugungsanlagen unter Berücksichtigung dieses Wertes gesteuert werden. Ein Verfahren hierzu ist das Betreiben einzelner Energieerzeugungsanlagen im Betriebspunkt maximaler Leistung (Maximum Power Point = MPP) und eine stärkere Abregelung der verbleibenden Energieerzeugungsanlagen. Ein zusätzlich in dem Gateway hinterlegtes Ziel kann es dabei sein, die im MPP betriebenen Energieerzeugungsanlagen zyklisch zu tauschen. Hierdurch werden nicht ständig ein und dieselben Betreiber der Energieerzeugungsanlagen mit einer Abregelung belastet, während die Betreiber der anderen Energieerzeugungsanlagen einspeisen. Zudem ergibt sich durch einen solchen zyklischen Austausch eine belastbarere Aussage, wie groß die maximal mögliche Einspeiseleistung tatsächlich ist.

In dem Gateway kann bei dem erfindungsgemäßen Verfahren auch die Funktion implementiert sein, dass Anfragedaten von verschiedenen Systemsteuerungseinheiten vor dem oder beim Verarbeiten auf Kollision untereinander geprüft und bei auftretenden Kollisionen zunächst gemeinsam einer Kollisionsbeseitigungsroutine zugeführt werden. So können Anfragedaten von verschiedenen Systemsteuerungseinheiten, die verschiedene Ziele in verschiedenen Teilbereichen des Versorgungsnetzes verfolgen, grundsätzlich einander entgegengesetzte Steuerbefehle zur Folge haben. Solche gegensätzlichen Steuerbefehle werden durch die Kollisionsbeseitigungsroutine verhindert, indem beispielsweise eines der Ziele dem anderen untergeordnet wird oder ein neues übergeordnetes Ziel formuliert wird, das beiden einzelnen Zielen nach einer vorgegebenen Gewichtung teilweise Rechnung trägt.

Selbst wenn verschiedene Anfragedaten vor der Verarbeitung auf keine Kollision untereinander hinweisen, kann eine Kollision während der Verarbeitung der Anfragedaten entstehen. Sie kann beispielsweise durch einen von dem Gateway selbstständig generierten Steuerbefehl an einzelne Energieerzeugungsanlagen ausgelöst werden, der innerhalb eines Ziels der Anfragedaten einer Systemsteuerungseinheit erlaubt ist, jedoch mit einem Ziels der Anfragedaten einer anderen Systemsteuerungseinheit kollidiert. Auch eine solche Kollision kann mit der Kollisionsbeseitigungsroutine ausgeräumt werden.

Das erfindungsgemäße Verfahren kann auch kaskadiert implementiert werden, indem mindestens eine der Steuerungseinheiten, von der Anfragedaten an dem Gateway empfangen werden, ein weiteres Gateway ist, an das das hier zunächst betrachtete Gateway als Energieerzeugungsanlage angeschlossen ist. Auch eine mehr als zweistufige Kaskade ist möglich.

Bei dem erfindungsgemäßen Verfahren können sich die an dem Gateway empfangenen Anfragedaten auf das Einhalten mindestens eines Netzparameters an mindestens einem Punkt des Versorgungsnetzes beziehen. Bei diesem Netzparameter kann es sich um einen Phasenwinkel zwischen Strom und Spannung in einem Wechselstromnetz, eine Spannung und/oder eine Frequenz und/oder deren Verteilung über das Versorgungsnetz handeln.

Bei dem erfindungsgemäßen Verfahren können sich die Anfragedaten auch auf die Übermittlung von Betriebsdaten der Gesamtheit oder einer in der Anfrage generisch definierten Teilmenge der Energieerzeugungsanlagen beziehen. Von dem Gateway wird eine solche generische Anfrage dann so verarbeitet, dass konkrete Steuerbefehle an einzelne Energieerzeugungsanlagen ergehen, soweit die interessierenden Betriebsdaten nicht schon in dem Gateway vorliegen und eine entsprechende Datenantwort aus diesem Bestand heraus zusammengestellt werden kann. Hierbei ist es insbesondere möglich, dass das Gateway aus separat vorliegenden Anlagendaten einen neuen, zunächst noch nicht vorhandenen Wert durch einen geeigneten Algorithmus berechnet und diesen an die Systemsteuerungseinheit weiterleitet. So kann beispielsweise aus den jeweils aktuell vorliegenden Einspeiseleistungen einzelner Energieerzeugungsanlagen über eine Summation aller an einem bestimmten Netzknotenpunkt angeschlossenen Energieerzeugungsanlagen eine insgesamt an dem Netzknotenpunkt eingespeiste Leistung ermittelt werden. Auf eine ähnliche Weise ist es auch möglich, bei Abregelung mehrerer Energieerzeugungsanlagen und einzelner bei maximaler Einspeisung betriebenen Energieerzeugungsanlagen, eine insgesamt von den abgeregelt betriebenen Energieerzeugungsanlagen vorgehaltene positive Regelleistung zu berechnen. Diese Berechnung kann von dem Gateway in definierten Zeitabständen aktualisiert und an die Systemsteuerungseinheit übermittelt werden. Aufgrund der zyklischen Aktualisierung stellt dieser Wert trotz schwankender Wetterverhältnisse eine relativ sichere Information dar, wie viel positive Regelleistung bei Bedarf real abgerufen werden kann.

Die an dem Gateway von den Energieerzeugungsanlagen empfangenen Anlagendaten können insbesondere Identifikationsdaten, die eine eineindeutige Identifikation der die Anlagendaten sendenden Energieerzeugungsanlage ermöglichen, und/oder aktuelle Betriebsparameter der jeweiligen Energieerzeugungsanlage umfassen. Weiterhin können die Anlagendaten generische Beschreibungen der jeweiligen Energieerzeugungsanlage und/oder Positionsangaben umfassen, die z. B. angeben, an welchem Punkt die jeweilige Energieerzeugungsanlage an das Versorgungsnetz angeschlossen ist. Solche generischen Beschreibungen und Positionsangaben können aber auch ausschließlich in ein Netzmodell des Versorgungsnetzes eingetragen sein, das in dem Gateway angelegt ist. Generische Beschreibungen einer Energieerzeugungsanlage geben z. B. ihren Typ, ihre Leistungsklasse oder dergleichen an und können genutzt werden, um entsprechende generische Anfragen von Systemsteuerungseinheiten zu befriedigen

Bei Energieerzeugungsanlagen in Form von PV-Anlagen können die Anlagendaten weiterhin Angaben zur geographischen Position und/oder zur Ausrichtung des der PV-Anlage zugeordneten PV-Generators umfassen. Die Ausrichtung der PV-Generatoren bei dezentral verteilten PV-Anlagen ist im Allgemeinen erdfest. Damit ändert sich die Einstrahlung über den Tag hinweg mit dem Sonnenstand. Für die Abarbeitung von Anfragedaten von Systemsteuerungseinheiten sind daher die Ausrichtung und auch die Position des PV-Generators einer PV-Anlage von großer Bedeutung. Letztere um einen Bezug zu einer lokalen Wetterprognose herzustellen. Beide Angaben haben Einfluss z. B. auf die Art und Weise, wie ein in Anfragedaten von einer Systemsteuerungseinheit definiertes Ziel sinnvoller Weise konkret von dem Gateway durch Steuerbefehle an die die einzelnen in Frage kommenden Energieerzeugungsanlagen umgesetzt wird.

Beim Erstellen von Datenantworten auf Datenanfragen in dem Gateway kann das Gateway Daten, die direkt aus Anlagendaten von den Energieerzeugungsanlagen oder anderen Einheiten, wie beispielsweise Messeinrichtungen, stammen, mit in dem Gateway gespeicherten Daten gemischt werden. Für die anfragende Systemsteuerungseinheit muss nicht erkennbar sein, ob die in der Datenantwort enthaltenen Daten direkt von einer konkreten Energieerzeugungsanlage, von einer oder mehreren generisch angesprochenen Energieerzeugungsanlagen, von mehreren zu einem virtuellen Kraftwerk zusammengefassten Energieerzeugungsanlagen und/oder aus einem Speicher des Gateways stammen.

Bei dem erfindungsgemäßen Verfahren ist es bevorzugt, wenn die Anfragedaten und/oder die Anlagendaten sowie die übersetzten Datenantworten und/oder Steuerbefehle von dem Gateway über geschützte Datenverbindungen empfangen und/oder an die bestimmten Systemsteuerungseinheiten und/oder Energieerzeugungsanlagen übersandt werden. Dabei kann die Vorteilhaftigkeit solcher geschützten Datenverbindungen von dem Datenmodell und dem Kommunikationsprotokoll abhängen, in dem die Daten zwischen dem Gateway und der jeweiligen Systemsteuerungseinheit bzw. der jeweiligen Energieerzeugungsanlage übertragen werden. Eine gewisse Datensicherheit und zugleich eine Funktionssicherheit für das erfindungsgemäße Verfahren wird auch dann erreicht, wenn der Empfang aller Anfragedaten und Anlagedaten sowie jeder Datenantwort und jedes Steuerbefehls von der empfangenden Einheit an die absendende Einheit bestätigt wird. Wenn kein Empfang bestätigt wird, kann die absendende Einheit die Absendung wiederholen. Wenn auch dies nicht zum Erfolg führt, kann ein Fehler an eine Überwachungseinheit signalisiert werden.

Bei dem erfindungsgemäßen Verfahren kann das Gateway die übersetzten Datenantworten und/oder Steuerbefehle über mindestens zwei getrennte Datenports an die bestimmten Systemsteuerungseinheiten und/oder Energieerzeugungsanlagen übersenden, wobei unter einem Datenport ein bestimmter physikalischer Anschluss des Gateways für das Senden der Daten auf drahtlosem oder drahtgebundenem Wege zu verstehen ist. Dabei kann ein Datenport für den Teil der Kommunikation zwischen dem Gateway und den Systemsteuerungseinheiten und ein anderer Datenport für die Kommunikation zwischen dem Gateway und den Energieerzeugungsanlagen vorgesehen sein. Es können aber auch unterschiedliche Datenports für unterschiedliche Systemsteuerungseinheiten und/oder unterschiedliche Energieerzeugungsanlagen vorgesehen sein. Zudem können sich die für die Kommunikation zwischen dem Gateway und den einzelnen Systemsteuerungseinheiten und Energieerzeugungsanlagen verwendeten Kommunikationsprotokolle auch so weit unterscheiden, dass sie nicht über denselben Datenport übertragbar wären. Grundsätzlich kann das Gateway aber auch nur einen einzigen Datenport aufweisen, wie beispielsweise eine Internetverbindung, über die es mit allen Systemsteuerungseinheiten und allen Energieerzeugungsanlagendaten kommuniziert.

Ein erfindungsgemäßer Datenserver ist so konfiguriert und programmiert, dass er das erfindungsgemäße Verfahren, wie es voranstehend beschrieben wurde, als Gateway ausführt. Die räumliche Anordnung eines solchen Datenservers relativ zu den Energieerzeugungsanlagen und Systemsteuerungseinheiten ist je nach den dazwischen ausgebildeten Datenverbindungen frei. Der Datenserver kann grundsätzlich auch an dem Ort einer Systemsteuerungseinheit oder auch einer Energieerzeugungseinheit angeordnet werden. Er kann zudem auch als weitere Systemsteuerungseinheit ausgebildet sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der dargestellten relativen Anordnung und Wirkverbindung mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden unter Bezugnahme auf die beigefügten Zeichnungen anhand konkreter Ausführungsbeispiele näher erläutert und beschrieben.
- **Fig. 1**: illustriert die Zwischenschaltung eines erfindungsgemäßen Gateways zwischen mehreren in ein Energieversorgungsnetz einspeisenden Energieerzeugungsanlagen einerseits und Systemsteuerungseinheiten andererseits; und
- **Fig. 2**: ist ein Blockdiagramm der Funktion des Gateways gemäß Fig. 1.

### FIGURENBESCHREIBUNG

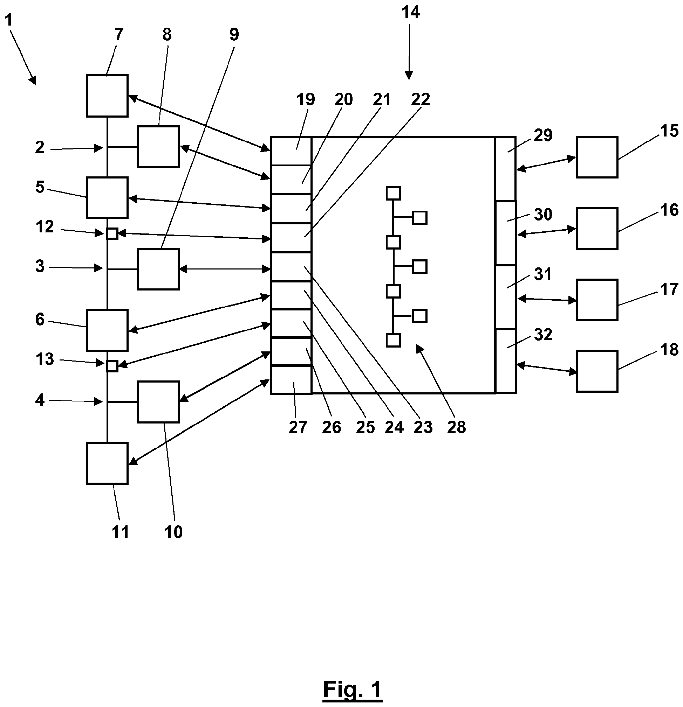

In **Fig. 1** ist links ein Versorgungsnetz 1 für elektrische Energie schematisch skizziert. Das Versorgungsnetz 1 besteht aus drei Teilbereichen 2 bis 4, zwischen die Transformatoren 5 und 6 geschaltet sind. Räumlich verteilte Energieerzeugungsanlagen 7 bis 11 speisen in die verschiedenen Bereiche 2 bis 4 des Versorgungsnetzes 1 ein. Messeinrichtungen 12 und 13 erfassen Netzparameter des Versorgungsnetzes 1 in den Bereichen 3 und 4. Gemeinsam werden die Transformatoren 5 und 6, die Energieerzeugungsanlagen 7 bis 11 und die Messeinrichtungen 12 und 13 hier auch als Einheiten 5 bis 13 bezeichnet. Nicht dargestellt sind in Fig. 1 aus Gründen der Übersichtlichkeit an das Versorgungsnetz 1 angeschlossene elektrische Lasten, obwohl diese im realen Fall natürlich vorhanden sind. Die in Fig. 1 dargestellten Einheiten 5 bis 13 kommunizieren mit einem Gateway 14 und über das Gateway 14 mit Systemsteuerungseinheiten 15 bis 18. Daneben können auch noch gleiche oder ähnliche Einheiten in dem oder an dem Vorsorgungsnetz 1 vorgesehen sein, die hier aber nicht dargestellt sind, weil sie nicht mit dem und über das Gateway 14 kommunizieren.

Für jede der Einheiten 5 bis 13 ist an dem Gateway 14 ein Übersetzer 19 bis 27 vorgesehen. Die Übersetzer 19 bis 27 übersetzen Anlagendaten von den Einheiten 5 bis 13 sowie Zustandsdaten von den Messeinrichtungen 12 und 13 aus einem Datenmodell der jeweiligen Einheit 5 bis 13, in dem sie an das Gateway 14 übermittelt werden, in ein einheitliches Metadatenmodell. Umgekehrt übersetzen die Übersetzer 19 bis 21, 23 und 24 sowie 26 und 27 Steuerbefehle von dem Gateway aus dem Metadatenmodell in die Datenmodelle, in denen sie an die Einheiten 5 bis 13 übertragen und dort verstanden werden. Die Übersetzer 19 bis 27 können zudem unterschiedliche Kommunikationsprotokolle bei der Kommunikation mit den einzelnen Einheiten 5 bis 13 berücksichtigen. Wenn mehrere der Einheiten 5 bis 13 dieselben Datenmodelle und Kommunikationsprotokolle verwenden, können einzelne oder mehrere der Übersetzer 19 bis 27 auch identisch ausgebildet sein, oder statt mehrerer dieser Übersetzer kann ein einziger Übersetzer vorgesehen sein. Die Anlagendaten und Zustandsdaten, die in das Metadatenmodell übersetzt wurden, werden in dem Gateway 14 verwaltet, d. h. insbesondere zwischengespeichert, und zwar unmittelbar oder nach einer Aufbereitung. Dabei basiert die Verwaltung der Anlagendaten und Zustandsdaten auf einem Netzmodell 28 des Versorgungsnetzes, oder zumindest wird dieses Netzmodell 28 bei der Verwaltung der Anlagendaten und Zustandsdaten berücksichtigt.

Neben einer reinen Verwaltung kann das Gateway 14 auch neue Datenpunkte aus den ihm vorliegenden Daten berechnen. Es kann somit Datenpunkte ergänzen, die vorher noch nicht da waren, jedoch für eine Systemsteuerungseinheit 15 bis 18 interessant sein können. Hierzu zählen beispielsweise eine vorgehaltene Regelleistung oder eine maximal mögliche Einspeiseleistung eines abgeregelt betriebenen Clusters von Energieerzeugungsanlagen 7 bis 11 sowie andere Betriebsdaten eines solchen Clusters.

Das Gateway 14 kann auch einen übergeordneten Steuerbefehl einer Systemsteuerungseinheit 15 bis 18 auf seine eigene Art und Weise umsetzen. So müssen z. B. bei einem abgeregelt betriebenen Cluster von Energieerzeugungsanlagen 7 bis 11 in dem Versorgungsnetz 1, bei dem einzelne Energieerzeugungsanlagen 7 bis 11 im MPP betrieben werden, nicht immer dieselben Energieerzeugungsanlagen 7 bis 11 im MPP betrieben werden. Vielmehr kann das Gateway 14 eigenständig Steuerbefehle an die einzelnen Energieerzeugungsanlagen 7 bis 11 mit dem Ziel senden, die im MPP betriebenen Energieerzeugungsanlagen 7 bis 11 in dem Versorgungsnetz 1 zyklisch mit abgeregelt betriebenen Energieerzeugungsanlagen 7 bis 11 zu tauschen. Dabei kann das Gateway 14 entscheiden, welche realen Energieerzeugungsanlagen 7 bis 11 im MPP betrieben und welche abgeregelt werden. Entscheidend ist, dass der Steuerungsbefehl der Systemsteuerungseinheit 15 bis 18 eingehalten wird. Die Art und Weise wie das geschieht, kann jedoch weitestgehend dem Gateway 14 überlassen werden.

Das Gateway 14 empfängt zudem Anfragedaten von den Systemsteuerungseinheiten 15 bis 18, wobei auch hier Übersetzer 29 bis 32 vorgesehen sind, die die in unterschiedlichen Datenmodellen und gegebenenfalls auch gemäß unterschiedlichen Kommunikationsprotokollen übermittelten Anfragedaten in das Metadatenmodell des Gateways 14 übersetzen. Die Anfragedaten von den Systemsteuerungseinheiten 15 bis 18 werden in dem Gateway 14 verarbeitet. Wenn sich die Anfragedaten auf bereits in dem Gateway 14 vorhandene Anlagendaten oder Zustandsdaten beziehen, werden Datenantworten auf die Anfragedaten unmittelbar in dem Metadatenmodell generiert. Diese Datenantworten werden dann von den den beteiligten Systemsteuerungseinheiten 15 bis 18 zugeordneten Übersetzern 29 bis 32 in das Datenmodell der jeweiligen Systemsteuerungseinheit 15 bis 18 übersetzt und gemäß dem hierfür passenden Kommunikationsprotokoll an die jeweilige Systemsteuerungseinheit 15 bis 18 übermittelt. Bei den mit den Anfragedaten angefragten Daten kann es sich unmittelbar um Anlagendaten aber auch um zusammengefasste oder anderweitig aufbereitete Anlagendaten handeln. Die zusammengefassten oder anderweitig aufbereiteten Anlagendaten können neue Datenpunkte umfassen, die erst innerhalb des Gateways 14 aus einzelnen Anlagendaten berechnet und somit neu erzeugt werden. Zu nennen sind hier beispielsweise aufbereitete Betriebsdaten zu einem Cluster aus einer Mehrzahl von Energieerzeugungsanlagen 7 bis 11, die im Hinblick auf einen gemeinsamen Steuerbefehl der Systemsteuerungseinheit 15 bis 18 in Form eines virtuellen Kraftwerks betrieben werden. Wenn die für die Datenantworten benötigten Anlagedaten in dem Gateway 14 nicht vorliegen, generiert das Gateway 14 in dem Metadatenmodell Steuerbefehle an die Einheiten 5 bis 13. Diese Steuerbefehle werden dann von den Übersetzern 19 bis 27 in die Datenmodelle der jeweiligen Einheit 5 bis 13 übersetzt und in dem jeweiligen Kommunikationsprotokoll übertragen. Als Antwort auf die Steuerbefehle werden dann neue Anlagen- bzw. Zustandsdaten über die Übersetzer 19 bis 27 empfangen und im Metadatenmodell zu den Datenantworten verarbeitet. Diese Datenantworten werden dann über die Übersetzer 29 bis 32 an die Systemsteuerungseinheiten 15 bis 18 übermittelt.

Bei Anfragedaten von den Systemsteuerungseinheiten 15 bis 18, die z. B. auf die Einstellung oder Steuerung bestimmter Netzparameter des Versorgungsnetzes 1 gerichtet sind, werden ebenfalls in dem Metadatenmodell Steuerbefehle generiert, die dann über die Übersetzer 19 bis 27 an die entsprechenden Einheiten 5 bis 13 übermittelt werden. Dabei brauchen die Anfragedaten sowohl dann, wenn sie sich auf die Übermittlung von Anlagen- oder Zustandsdaten beziehen, oder auch dann, wenn es sich um Anweisungen hinsichtlich bestimmter Netzparameter handelt, noch keinen Bezug zu einzelnen der Einheiten 5 bis 13 aufzuweisen. Dieser Bezug kann vielmehr von dem Gateway 14 auf Basis des Netzmodells 28 oder aufgrund von generischen Angaben hergestellt werden, die von den Einheiten 5 bis 13 in ihren Anlagen- bzw. Zustandsdaten übermittelt werden.

Die in Fig. 1 dargestellten verschiedenen Übersetzer 19 bis 27 und 29 bis 32 können auch unterschiedlichen Datenports des Gateways 14 entsprechen. Bei den Datenmodellen, die von den Übersetzern 19 bis 27 und 29 bis 32 in das Metadatenmodell übersetzt werden und umgekehrt, kann es sich beispielsweise um IEC 61850, SunSpec oder andere auf OPC basierende Datenmodelle handeln. Die von den Übersetzern 29 bis 32 übersetzten Datenmodelle können sich von den von den Übersetzern 19 bis 27 übersetzten Datenmodellen 33 bis 35 unterscheiden, es kann sich hierbei jedoch auch um die gleichen Datenmodelle 33 bis 35 handeln. Auch alle Datenmodelle 33 bis 35 können gleich sein.

Dabei mag eine Übersetzung von Anfragedaten aus einem Datenmodell 33 bis 35 einer anfragenden Systemsteuerungseinheit 15 bis 18 in das Metadatenmodell 36 und eine nachfolgende Übersetzung aus dem Metadatenmodell 36 in ein mit dem ursprünglichen Datenmodell 33 bis 35 identischen Datenmodell 33 bis 35 einer der Einheiten 5 bis 13, nicht notwendig erscheinen. Dies ist prinzipiell auch der Fall. Allerdings ist eine derartige Vorgehensweise im Hinblick auf eine Vervollständigung und/oder Aktualisierung der Datenpunkte in dem Metadatenmodell 36, sowie eine standardisierte Verarbeitung von in dem Gateway 14 eingehenden Anfragedaten und/oder Anlagendaten und von von dem Gateway 14 versandten Steuerbefehlen und/oder Datenantworten jedoch durchaus vorteilhaft.

Das Metadatenmodell des Gateways 14 definiert Datenpunkte, die zwischen den Systemsteuerungseinheiten 15 bis 18 und den Einheiten 5 bis 13 ausgetauscht werden. Das Gateway 14 hat seine primäre Funktion als Vermittler der Datenflüsse zwischen den Einheiten 5 bis 13 und den Systemsteuerungseinheiten 15 bis 18. Die Vermittlung dieser Datenströme erfolgt dabei aber nicht nur durch reines Rooting, sondern auch durch Aggregieren und weitergehende Verarbeitung der Daten bis hin zur Erzeugung von neuen Datenpunkten aus bereits vorhandenen oder anzufragenden Datenpunkten innerhalb des Gateways 14. Eine weitergehende Funktion des Gateways 14 eröffnet sich dadurch, dass das Gateway 14 auf Basis von von den Systemsteuerungseinheiten 15 bis 18 erhaltenen Anfragedaten selbstständig Steuerbefehle an einzelne Energieerzeugungsanlagen 7 bis 11 generieren kann. Die generierten Steuerbefehle sind einerseits den übergeordneten Anfragedaten einer Systemsteuerungseinheit 15 bis 18 untergeordnet und müssen daher insgesamt diesen übergeordneten Anfragedaten gerecht werden. Die Art und Weise, wie die jeweiligen übergeordneten Anfragedaten im Detail umgesetzt werden, kann jedoch teilweise oder ganz innerhalb des Gateways 14 und auch von dem Gateway 14 selbst entschieden werden. Dies wird im Folgenden beispielhaft anhand von konkreten Anfragedaten einer bestimmten Systemsteuerungseinheit 15 bis 18 erläutert:

In dem Beispiel seien die Anfragedaten von der Steuerungseinheit 15 bis 18 darauf gerichtet, dass eine bestimmte Menge an positiver Regelleistung an einem vorgegebenen Punkt innerhalb des Versorgungsnetzes 1 vorgehalten wird. Ein Verfahren zur Umsetzung dieser Anfragedaten erfolgt nun derart, dass zunächst über das Netzmodell 28 die Gesamtheit der in Frage kommenden Energieerzeugungsanlagen 7 bis 11 identifiziert wird, die an den vorgegebenen Punkt des Versorgungsnetzes 1 angeschlossen sind. Aus dieser Gesamtheit der in Frage kommenden Energieerzeugungsanlagen 7 bis 11 werden nun einzelne Energieerzeugungsanlagen 7 bis 11 bei ihrer maximal möglichen Einspeiseleistung, d. h. im MPP, betrieben, während die restlichen Energieerzeugungsanlagen 7 bis 11 der Gesamtheit der in Frage kommenden Energieerzeugungsanlagen 7 bis 11 derart abgeregelt betrieben werden, dass in Summe über die Gesamtheit der in Frage kommenden Energieerzeugungsanlagen 7 bis 11 die seitens der Systemsteuerungseinheit 15 bis 18 vorgegebene positive Regelleistung eingehalten wird. Die im MPP betriebenen Energieerzeugungsanlagen dienen hierbei einer Abschätzung einer aktuell maximal möglichen Einspeiseleistung - und somit auch der vorgehaltenen positiven Regelleistung - der insgesamt abgeregelt betriebenen Gesamtheit der in Frage kommenden Energieerzeugungsanlagen 7 bis 11.

In diesem Beispiel sind die übergeordneten Anfragedaten, die insgesamt durch die Steuerbefehle des Gateways 14 umgesetzt werden müssen, auf die Einhaltung der vorgegebenen positiven Regelleistung gerichtet. Dabei kann das Gateway 14 teilweise oder ganz selbstständig definieren, welche einzelnen Energieerzeugungsanlagen 7 bis 11 aus der Gesamtheit der in Frage kommenden Energieerzeugungsanlagen 7 bis 11 in welchem Maß abgeregelt werden und welche parallel dazu als Referenz bei ihrer maximal möglichen Einspeiseleistung betrieben werden. Insbesondere können die jeweils als Referenz dienenden Energieerzeugungsanlagen 7 bis 11 auch zyklisch mit anderen Energieerzeugungsanlagen 7 bis 11 aus der Gesamtheit der in Frage kommenden Energieerzeugungsanlagen 7 bis 11 getauscht werden, solange in Summe die vorgehaltene positive Regelleistung eingehalten wird. Auch die zyklische Vertauschung der als Referenz dienenden Energieerzeugungsanlagen kann eigenständig von dem Gateway 14 entschieden und durch Übermittlung entsprechender Steuerbefehle an die Energieerzeugungsanlagen 7 bis 11 umgesetzt werden.

Die Verarbeitung der Anfragedaten von den Systemsteuerungseinrichtungen 15 bis 18 innerhalb des Gateways 14 kann durch Aufbau eines Transaktionsstapels erfolgen, der mit jeder neuen Anfrage von oben beladen und der die Verknüpfungen der jeweils anfragenden Systemsteuerungseinheit 15 bis 18 mit den zugehörigen Einheiten 5 bis 13 bzw. den von diesen stammenden Anlagen- und Zustandsdaten für jede in den Anfragedaten enthaltene Anfrage überwacht. Die Abarbeitung der Anfragen kann dabei sequenziell und/oder parallel erfolgen.

Das Gateway 14 kann auch Funktionen ausführen, ohne dass (neue) Anfragedaten vorliegen. Es kann Steuerbefehle an Energieerzeugungsanlagen 7 bis 11 und Transformatoren 5 und 6 wiederholen, die ansonsten in ihren Ausgangszustand zurückfallen. Das Gateway 14 kann auch selbsttätig Anlagendaten von den Einheiten 5 bis 13 durch Steuerbefehle abfragen, um daraus neue Datenpunkte zu berechnen. Das Gateway 14 kann Alarmszustände signalisieren, die es anhand der von den Einheiten 5 bis 13 übermittelten Anlagendaten oder den daraus erstellten bzw. aufbereiteten Datenpunkten erkennt. Das Gateway 14 kann Anfragedaten und Datenantworten zur Dokumentation abspeichern. Ebenfalls zur Dokumentation können in dem Gateway 14, auch ohne dass entsprechende Anfragen vorliegen, Zustandsdaten und Anlagendaten von den Einheiten 5 bis 13 dokumentiert werden.

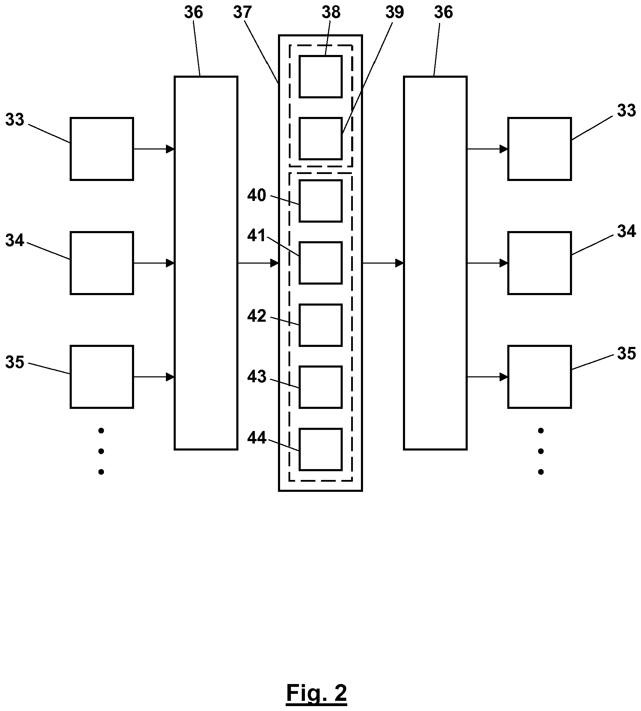

**Fig. 2** ist ein schematisches Blockdiagramm zur Funktion des Gateways 14 gemäß Fig. 1. Links sind verschiedene Datenmodelle 33 bis 35 angedeutet, in denen Anlagendaten, Zustandsdaten oder Anfragedaten empfangen werden. Diese Daten werden sämtlich in ein Metadatenmodell 36 übersetzt. Dann erfolgt eine Verarbeitung 37 der Daten. Dabei sind Teilschritte 38 bis 44 der Verarbeitung 37 angedeutet. Ein Teilschritt 38 steht für eine direkte Vermittlung von Daten. Ein Teilschritt 39 steht für eine Speicherung der entsprechenden Datentransaktionen. Ein Teilschritt 40 steht für die Anwendung eines Regelalgorithmus in dem Gateway 14 gemäß Fig. 1, um eine bestimmte in Anfragedaten einer Systemsteuerungseinheit 15 bis 18 enthaltene Anweisung umzusetzen. Ein Teilschritt 41 steht für eine Aggregation von Daten in dem Gateway 14 zu neuen Datenpunkten. Ein Teilschritt 42 steht für eine Wiederholung von Steuerbefehlen. Ein Teilschritt 43 steht für eine Aufzeichnung von Daten zu Dokumentationszwecken, und ein Teilschritt 44 steht für eine Alarmierung im Falle von irregulären Zuständen, die von dem Gateway 14 erfasst werden. Die Ergebnisse der Verarbeitung 37 werden aus dem Metadatenmodell 36 wieder in die Datenmodelle 33 bis 35 übersetzt, in denen die aus der Verarbeitung resultierenden Steuerbefehle bzw. Datenantworten an die jeweiligen Einheiten 5 bis 13 bzw. Systemsteuerungseinheiten 15 bis 18 übertragen werden.

In einem konkreten Beispiel schickt eine Leitwarte eines Netzbetreibers als Systemsteuerungseinheit 15 bis 18 Anfragedaten an das Gateway, in denen eine Anfrage nach einem Messwert, z. B. nach der aktuellen Gesamtleistung der Energieerzeugungsanlagen 7 bis 11, enthalten ist. Die Systemsteuerungseinheit 15 bis 18 verwendet dabei ein Datenmodell 33 bis 35, auf das der Betreiber des Gateways 14 und der Betreiber der Systemsteuerungseinheit 15 bis 18 sich zuvor geeinigt haben, so dass an dem Gateway 14 ein entsprechender Übersetzer 29 bis 32 vorgehalten wird. Dieser Übersetzer konvertiert die Anfragedaten aus dem Datenmodell 33 bis 35 in das Metadatenmodell 36 des Gateways 14. Das Gateway 14 verarbeitet dann die übersetzte Anfrage unter Berücksichtigung des Netzmodells 28 und ermittelt die zur Beantwortung der Anfrage anzusprechenden Einheiten 5 bis 13. An diese werden dann über die entsprechenden Übersetzer 19 bis 27 Steuerbefehle in den zugehörigen Datenmodellen 33 bis 35 übersandt. Die daraufhin zurückerhaltenen Anlagendaten werden von den Übersetzern zurück in das Metadatenmodell 36 übersetzt, ggf. zusammengefasst, aufbereitet oder zur Berechnung eines neuen Datenpunkts herangezogen. Danach wird von dem Gateway 14 eine Datenantwort für die Systemsteuerungseinheit 15 bis 18 generiert, die über den jeweiligen Übersetzer 29 bis 32 an die anfragende Systemsteuerungseinheit 15 bis 18 ausgegeben wird.

Die Systemsteuerungseinheiten 15 bis 18 können in ihren Anfragedaten sämtliche Energieerzeugungsanlagen 7 bis 11 oder auch Teilgruppen davon als virtuelles Kraftwerk ansprechen, ohne dass dabei die Systemsteuerungseinheiten 15 bis 18 die genaue Zusammensetzung dieser virtuellen Kraftwerke kennen müssen, soweit diese Zusammensetzung in dem Netzmodell 28 des Gateways 14 abgelegt ist. Zu diesem Zweck müssen sie nicht direkt mit den einzelnen Energieerzeugungsanlagen 7 bis 11 kommunizieren, sondern indirekt über das Gateway 14. Das Gateway 14 berechnet hierbei Datenpunkte, die für eine Systemsteuerungseinheit 15 bis 18 interessant sind, aber in den einzelnen Energieerzeugungsanlagen 7 bis 11 typischerweise nicht vorhanden sind und - unter Berücksichtigung des Gateways 14 - auch nicht vorhanden sein müssen. Die für die Systemsteuerungseinheiten 15 bis 18 interessanten Datenpunkte ergeben sich oftmals erst bei einer zusammenschauenden Betrachtung der jeweils in Frage kommenden Energieerzeugungsanlagen 7 bis 11. Erfindungsgemäß wird diese zusammenschauende Betrachtung an einer zentralen Stelle, nämlich innerhalb des Gateways 14 durchgeführt. Hierdurch wird vermieden, Betriebsdaten einer bestimmten Energieerzeugungsanlage 7 bis 11 in anderen Energieerzeugungsanlagen 7 bis 11 vorzuhalten. Die Komplexität der Kommunikation einer bzw. mehrerer Systemsteuerungseinheiten 15 bis 18 mit einer Mehrzahl an Energieerzeugungsanlagen 7 bis 11 wird dadurch deutlich reduziert.

### BEZUGSZEICHENLISTE

- 1: Versorgungsnetz
- 2: Bereich
- 3: Bereich
- 4: Bereich
- 5: Transformator
- 6: Transformator
- 7: Energieerzeugungsanlage
- 8: Energieerzeugungsanlage
- 9: Energieerzeugungsanlage
- 10: Energieerzeugungsanlage
- 11: Energieerzeugungsanlage
- 12: Messeinrichtung
- 13: Messeinrichtung
- 14: Gateway
- 15: Systemsteuerungseinheit
- 16: Systemsteuerungseinheit
- 17: Systemsteuerungseinheit
- 18: Systemsteuerungseinheit
- 19: Übersetzer
- 20: Übersetzer
- 21: Übersetzer
- 22: Übersetzer
- 23: Übersetzer
- 24: Übersetzer
- 25: Übersetzer
- 26: Übersetzer
- 27: Übersetzer
- 28: Netzmodell
- 29: Übersetzer
- 30: Übersetzer
- 31: Übersetzer
- 32: Übersetzer
- 33: Datenmodell
- 34: Datenmodell
- 35: Datenmodell
- 36: Metadatenmodell
- 37: Verarbeitung
- 38: Teilschritt
- 39: Teilschritt
- 40: Teilschritt
- 41: Teilschritt
- 42: Teilschritt
- 43: Teilschritt
- 44: Teilschritt

## Patentansprüche

1. Verfahren zur Kommunikation von Systemsteuerungseinheiten (15 bis 18) mit einer Mehrzahl von räumlich verteilten Energieerzeugungsanlagen (7 bis 11), die gemeinsam in ein zusammenhängendes Versorgungsnetz (1) für elektrische Energie einspeisen,
- wobei Anfragedaten von den Systemsteuerungseinheiten (15 bis 18) und Anlagendaten von den Energieerzeugungsanlagen (7 bis 11) an einem gemeinsamem Gateway (14) empfangen werden;
- wobei die Anlagendaten in dem Gateway (14) verwaltet und die Anfragedaten in dem Gateway (14) verarbeitet werden und
- wobei von dem Gateway (14) Steuerbefehle an die Energieerzeugungsanlagen (7 bis 11) und/oder Datenantworten an die Systemsteuerungseinheiten (15 bis 18) versandt werden, die aus dem Verarbeiten der Anfragedaten resultieren,
**dadurch gekennzeichnet,**
- **dass** die Anfragedaten in mindestens zwei verschiedenen Datenmodellen (33 bis 35) der einzelnen Systemsteuerungseinheiten (15 bis 18) und/oder die Anlagendaten in mindestens zwei verschiedenen Datenmodellen (33 bis 35) der einzelnen Energieerzeugungsanlagen (7 bis 11) an dem Gateway (14) empfangen werden,
- **dass** die Anfragedaten und die Anlagendaten in dem Gateway (14) aus ihren jeweiligen Datenmodellen (33 bis 35) in ein Metadatenmodell (36) übersetzt werden,
- **dass** die übersetzten Anlagendaten in dem Gateway (14) verwaltet und die übersetzten Anfragedaten in dem Gateway (14) verarbeitet werden, woraus aus Anlagendaten zusammengestellte Datenantworten an bestimmte Systemsteuerungseinheiten (15 bis 18) und/oder Steuerbefehle an bestimmte Energieerzeugungsanlagen (7 bis 11) in dem Metadatenmodell (36) resultieren,
- **dass** die Datenantworten und/oder Steuerbefehle in dem Gateway (14) aus dem Metadatenmodell (36) in die Datenmodelle (33 bis 35) der bestimmten Systemsteuerungseinheiten (15 bis 18) und/oder Energieerzeugungsanlagen (7 bis 11) übersetzt werden und
- **dass** die übersetzten Datenantworten und/oder Steuerbefehle von dem Gateway (14) an die bestimmten Systemsteuerungseinheiten (15 bis 18) und/oder Energieerzeugungsanlagen (7 bis 11) übersandt werden.

2. Verfahren nach Anspruch 1, **dadurch gekennzeichnet, dass** in dem Gateway (14) ein Netzmodell (28) des Versorgungsnetzes (1) und der einspeisenden Energieerzeugungsanlagen (7 bis 11) beim Verarbeiten der Anfragedaten berücksichtigt wird.

3. Verfahren nach Anspruch 1 oder 2, **dadurch gekennzeichnet, dass** das Gateway (14), ohne dass entsprechende Anfragedaten von Systemsteuerungseinheiten (15 bis 18) vorliegen, Steuerbefehle an die Energieerzeugungsanlagen (7 bis 11) übersendet, mit denen Anlagendaten von den Energieerzeugungsanlagen (7 bis 11) angefordert werden.

4. Verfahren nach einem der vorhergehenden Ansprüche, **dadurch gekennzeichnet, dass** Zustandsdaten von Messeinrichtungen (12, 13) an dem Gateway (14) empfangen werden, dass die Zustandsdaten in dem Gateway (14) aus ihren jeweiligen Datenmodellen (33 bis 35) in das Metadatenmodell (36) übersetzt werden und dass die übersetzten Zustandsdaten in dem Gateway (14) verwaltet werden.

5. Verfahren nach einem der vorhergehenden Ansprüche, **dadurch gekennzeichnet, dass** Wetterprognosedaten an dem Gateway (14) empfangen werden und bei der Verarbeitung der Anfragedaten der Systemsteuerungseinheiten (15 bis 18) und/oder bei dem Versenden der Steuerbefehle an die Energieerzeugungsanlagen (7 bis 11) von dem Gateway (14) berücksichtigt werden.

6. Verfahren nach einem der vorhergehenden Ansprüche, **dadurch gekennzeichnet, dass** die Anfragedaten solche Anfragedaten umfassen, bei denen resultierende Steuerbefehle von dem Gateway (14) in einer zeitlichen Abfolge und/oder von dem Gateway (14) wiederholt übersandt werden, bis ein in den Anfragedaten definiertes Ziel erreicht ist.

7. Verfahren nach einem der vorhergehenden Ansprüche, **dadurch gekennzeichnet, dass** die Anfragedaten von verschiedenen Systemsteuerungseinheiten (15 bis 18), die verschiedene Ziele in verschiedenen Teilbereichen des Versorgungsnetzes verfolgen, vor dem und/oder während des Verarbeiten(s) auf Kollisionen der Ziele der Anfragedaten der verschiedenen Systemsteuerungseinheiten (15 bis 18) untereinander geprüft und bei auftretenden Kollisionen gemeinsam einer Kollisionsbeseitigungsroutine zugeführt werden.

8. Verfahren nach einem der vorhergehenden Ansprüche, **dadurch gekennzeichnet, dass** mindestens eine der Systemsteuerungseinheiten (15 bis 18) ein weiteres Gateway (14) ist, an das das Gateway (14) als Energieerzeugungsanlage (7 bis 11) angeschlossen ist.

9. Verfahren nach einem der vorhergehenden Ansprüche, **dadurch gekennzeichnet, dass** die Anfragedaten Anfragen nach dem Einhalten mindestens eines Netzparameters an mindestens einem Punkt des Versorgungsnetzes (1) umfassen, wobei optional der mindestens eine Netzparameter ein Phasenwinkel und/oder eine Spannung und/oder eine Frequenz und/oder deren Verteilung über das Versorgungsnetz (1) ist.

10. Verfahren nach einem der vorhergehenden Ansprüche, **dadurch gekennzeichnet, dass** die Anfragedaten Anfragen nach der Übermittlung von Betriebsdaten der Gesamtheit oder einer in den Anfragedaten generisch definierten Teilmenge der Energieerzeugungsanlagen (7 bis 11) umfassen.

11. Verfahren nach einem der vorhergehenden Ansprüche, **dadurch gekennzeichnet, dass** die Anlagendaten Identifikationsdaten und aktuelle Betriebsparameter der Energieerzeugungsanlagen (7 bis 11) umfassen wobei optional die Anlagendaten weiterhin generische Beschreibungen der jeweiligen Energieerzeugungsanlage (7 bis 11) und/oder Positionsangaben umfassen, die angeben, an welchem Punkt die jeweilige Energieerzeugungsanlage (7 bis 11) an das Versorgungsnetz (1) angeschlossen ist.

12. Verfahren nach Anspruch 11, **dadurch gekennzeichnet, dass** die Anlagendaten bei Energieerzeugungsanlagen (7 bis 11) in Form von PV-Anlagen weiterhin Angaben zur geographischen Position und/oder zur Ausrichtung des der PV-Anlage zugeordneten PV-Generators umfassen.

13. Verfahren nach einem der vorhergehenden Ansprüche, **dadurch gekennzeichnet, dass** die Anfragedaten und/oder die Anlagendaten sowie die übersetzten Datenantworten und/oder Steuerbefehle von dem Gateway (14) über geschützte Datenverbindungen empfangen und/oder an die bestimmten Systemsteuerungseinheiten (15 bis 18) und/oder Energieerzeugungsanlagen (7 bis 11) übersandt werden.

14. Verfahren nach einem der vorhergehenden Ansprüche, **dadurch gekennzeichnet, dass** die Anfragedaten von und die Datenantworten an verschiedene(n) Systemsteuerungseinheiten (15 bis 18) und/oder die Anlagendaten von und die Steuerbefehle an verschiedene(n) Energieerzeugungsanlagen (7 bis 11) gemäß mindestens zwei verschiedenen Kommunikationsprotokollen und/oder über mindestens zwei getrennte Datenports an den bzw. die Systemsteuerungseinheiten (15 bis 18) und/oder Energieerzeugungsanlagen (7 bis 11) empfangen bzw. übersandt werden.

15. Verfahren nach einem der vorhergehenden Ansprüche, **dadurch gekennzeichnet, dass** von dem Gateway (14) selbstständig Steuerbefehle an die Energieerzeugungsanlagen (7 bis 11) generiert werden, um ein in dem Gateway (14) hinterlegtes Ziel und/oder ein in den Anfragedaten der Systemsteuerungseinheiten (15 bis 18) definiertes globales Ziel zu verfolgen.

16. Datenserver, der konfiguriert und programmiert ist, um das Verfahren nach einem der vorhergehenden Ansprüche als Gateway (14) auszuführen.

## Claims

1. A method for the communication of system control units (15 to 18) with a plurality of spatially distributed energy generating systems (7 to 11), which jointly feed into a continuous supply network (1) for electrical energy,
- wherein request data from the system control units (15 to 18) and system data from the energy generating systems (7 to 11) are received at a common gateway (14);
- wherein the system data are managed in the gateway (14) and the request data are processed in the gateway (14), and
- wherein the gateway (14) sends control commands to the energy generating systems (7 to 11) and/or data responses to the system control units (15 to 18) that result from the processing of the request data,
**characterized**
- **in that** the request data in at least two different data models (33 to 35) of the individual system control units (15 to 18) and/or the system data in at least two different data models (33 to 35) of the individual energy generating systems (7 to 11) are received at the gateway (14),
- **in that** the request data and the system data are translated from their respective data models (33 to 35) into a metadata model (36) in the gateway (14),
- **in that** the translated system data are managed in the gateway (14) and the translated request data are processed in the gateway (14), wherefrom data responses compiled from system data to specific system control units (15 to 18) and/or control commands to specific energy generating systems (7 to 11) result in the metadata model (36),
- **in that** the data responses and/or control commands are translated from the metadata model (36) into the data models (33 to 35) of the specific system control units (15 to 18) and/or energy generating systems (7 to 11) in the gateway (14), and
- **in that** the translated data responses and/or control commands are transmitted by the gateway (14) to the specific system control units (15 to 18) and/or energy generating systems (7 to 11).

2. The method as claimed in claim 1, **characterized in that** in the gateway (14) a network model (28) of the supply network (1) and of the feeding-in energy generating systems (7 to 11) is taken into account during the processing of the request data.

3. The method as claimed in claim 1 or 2, **characterized in that** the gateway (14), in the absence of corresponding request data from system control units (15 to 18), transmits control commands to the energy generating systems (7 to 11) that ask for system data from the energy generating systems (7 to 11).

4. The method as claimed in any of the preceding claims, **characterized in that** state data from measuring devices (12, 13) are received at the gateway (14), **in that** the state data are translated from their respective data model (33 to 35) into the metadata model (36) in the gateway (14), and **in that** the translated state data are managed in the gateway (14).

5. The method as claimed in any of the preceding claims, **characterized in that** weather forecast data are received at the gateway (14) and are taken into account during the processing of the request data of the system control units (15 to 18) and/or during the sending of the control commands to the energy generating systems (7 to 11) by the gateway (14).

6. The method as claimed in any of the preceding claims, **characterized in that** the request data comprise such request data for which resulting control commands are transmitted in a temporal sequence by the gateway (14) and/or repeatedly by the gateway (14) until an objective defined in the request data is achieved.

7. The method as claimed in any of the preceding claims, **characterized in that** the request data from different system control units (15 to 18) are checked for collisions before and/or during processing and, in the event of collisions occurring, are fed jointly to a collision eliminating routine.

8. The method as claimed in any of the preceding claims, **characterized in that** at least one of the system control units (15 to 18) is a further gateway (14), to which the gateway (14) is connected as an energy generating system (7 to 11).

9. The method as claimed in any of the preceding claims, **characterized in that** the request data comprise requests for compliance with at least one network parameter at at least one point of the supply network (1), wherein optionally the at least one network parameter is a phase angle and/or a voltage and/or a frequency and/or the distribution thereof over the supply network (1).

10. The method as claimed in any of the preceding claims, **characterized in that** the request data comprise requests for communication of operating data of the totality of the energy generating systems (7 to 11) or of a subset of the energy generating systems (7 to 11) that is defined generically in the request data.

11. The method as claimed in any of the preceding claims, **characterized in that** the system data comprise identification data and present operating parameters of the energy generating systems (7 to 11), wherein optionally the system data furthermore comprise generic descriptions of the respective energy generating system (7 to 11) and/or position indications that indicate at what point the respective energy generating system (7 to 11) is connected to the supply network (1).

12. The method as claimed in claim 11, **characterized in that** the system data in the case of energy generating systems (7 to 11) in the form of PV systems furthermore comprise indications concerning a geographical position and/or concerning an alignment of the PV generator assigned to the PV system.

13. The method as claimed in any of the preceding claims, **characterized in that** the request data and/or the system data and also the translated data responses and/or control commands are received and/or transmitted to the specific system control units (15 to 18) and/or energy generating systems (7 to 11) by the gateway (14) via protected data connections.

14. The method as claimed in any of the preceding claims, **characterized in that** the request data from and the data responses to different system control units (15 to 18) and/or the system data from and the control commands to different energy generating systems (7 to 11) are received from and transmitted to the system control units (15 to 18) and/or energy generating systems (7 to 11) in accordance with at least two different communication protocols and/or via at least two separate data ports.

15. The method as claimed in any of the preceding claims, **characterized in that** the gateway (14) independently generates control commands to the energy generating systems (7 to 11) in order to pursue an objective stored in the gateway (14) and/or a global objective defined in the request data of the system control units (15 to 18).

16. A data server configured and programmed to perform the method as claimed in any of the preceding claims as a gateway (14).

## Revendications

1. Procédé de communication d'unités de commande de système (15 à 18) avec une pluralité d'installations de production d'énergie (7 à 11) distribuées dans l'espace, lesquelles injectent en commun dans un réseau de distribution (1) continu d'énergie électrique,
- des données d'interrogation provenant des unités de commande de système (15 à 18) et des données d'installation provenant des installations de production d'énergie (7 à 11) étant reçues au niveau d'une passerelle (14) commune ;
- les données d'installation étant gérées dans la passerelle (14) et les données d'interrogation étant traitées dans la passerelle (14) et
- des instructions de commande étant envoyées de la passerelle (14) aux installations de production d'énergie (7 à 11) et/ou des réponses de données aux unités de commande de système (15 à 18), lesquelles résultent du traitement des données d'interrogation,
**caractérisé en ce**
- **que** les données d'interrogation sont reçues au niveau de la passerelle (14) dans au moins deux modèles de données (33 à 35) différents des unités de commande de système (15 à 18) individuelles et/ou les données d'installations dans au moins deux modèles de données (33 à 35) différents des installations de production d'énergie (7 à 11) individuelles,
- **que** les données d'interrogation et les données d'installation sont converties dans la passerelle (14) depuis leurs modèles de données (33 à 35) respectifs en un modèle de métadonnées (36),
- **que** les données d'installation converties sont gérées dans la passerelle (14) et les données d'interrogation converties sont traitées dans la passerelle (14), les réponses de données à partir des données d'installations à des unités de commande de système (15 à 18) définies et/ou les instructions de commande à des installations de production d'énergie (7 à 11) définies résultant dans le modèle de métadonnées (36),
- **que** les réponses de données et/ou les instructions de commande sont converties dans la passerelle (14) du modèle de métadonnées (36) en les modèles de données (33 à 35) des unités de commande de système (15 à 18) et/ou des installations de production d'énergie (7 à 11) définies et
- **que** les réponses de données et/ou les instructions de commande converties sont transmises par la passerelle (14) aux unités de commande de système (15 à 18) et/ou aux installations de production d'énergie (7 à 11) définies.

2. Procédé selon la revendication 1, **caractérisé en ce qu'**un modèle de réseau (28) du réseau de distribution (1) et des installations de production d'énergie (7 à 11) qui injectent est pris en compte dans la passerelle (14) lors du traitement des données d'interrogation.

3. Procédé selon la revendication 1 ou 2, **caractérisé en ce que** la passerelle (14), sans que des données d'interrogation correspondantes des unités de commande de système (15 à 18) soient présentes, envoie aux installations de production d'énergie (7 à 11) des instructions de commande avec lesquelles des données d'installation sont sollicitées de la part des installations de production d'énergie (7 à 11).

4. Procédé selon l'une des revendications précédentes, **caractérisé en ce que** des données d'état de dispositifs de mesure (12, 13) sont reçues au niveau de la passerelle (14), **en ce que** les données d'état sont converties dans la passerelle (14) à partir de leurs modèles de données (33 à 35) respectifs en le modèle de métadonnées (36) et **en ce que** les données d'état converties sont gérées dans la passerelle (14).

5. Procédé selon l'une des revendications précédentes, **caractérisé en ce que** des données de prévision météorologique sont reçues au niveau de la passerelle (14) et sont prises en compte par la passerelle (14) lors du traitement des données d'interrogation des unités de commande de système (15 à 18) et/ou lors de l'envoi des instructions de commande aux installations de production d'énergie (7 à 11).

6. Procédé selon l'une des revendications précédentes, **caractérisé en ce que** les données d'interrogation contiennent des données d'interrogation avec lesquelles les instructions de commande qui en résultent sont transmises par la passerelle (14) dans une séquence chronologique et/ou de manière répétitive par la passerelle (14) jusqu'à ce qu'un objectif défini dans les données d'interrogation soit atteint.

7. Procédé selon l'une des revendications précédentes, **caractérisé en ce que** les données d'interrogation de différentes unités de commande de système (15 à 18), lesquelles poursuivent des objectifs différents dans différentes zones partielles du réseau de distribution, sont soumises à un contrôle mutuel avant et/ou après le traitement pour détecter d'éventuelles collisions des objectifs des données d'interrogation des différentes unités de commande de système (15 à 18) et, lorsque des collisions se produisent, sont acheminées ensemble à une routine d'élimination de collision.

8. Procédé selon l'une des revendications précédentes, **caractérisé en ce qu'**au moins l'une des unités de commande de système (15 à 18) est une passerelle (14) supplémentaire à laquelle est raccordée la passerelle (14) en tant qu'installation de production d'énergie (7 à 11).

9. Procédé selon l'une des revendications précédentes, **caractérisé en ce que** les données d'interrogation comprennent des interrogations relatives au respect d'au moins un paramètre de réseau au niveau d'au moins un point du réseau de distribution (1), ledit au moins paramètre de réseau étant, en option, un angle de phase et/ou une tension et/ou une fréquence et/ou sa distribution sur le réseau de distribution (1).

10. Procédé selon l'une des revendications précédentes, **caractérisé en ce que** les données d'interrogation comprennent des interrogations à propos de la communication de données de fonctionnement de l'ensemble ou d'une quantité partielle des installations de production d'énergie (7 à 11) qui est définie de manière générique dans les données d'interrogation.

11. Procédé selon l'une des revendications précédentes, **caractérisé en ce que** les données d'installation comprennent des données d'identification et des paramètres de fonctionnement actuels des installations de production d'énergie (7 à 11), les données d'installation comprenant en plus, en option, des descriptions génériques de l'installation de production d'énergie (7 à 11) correspondante et/ou des indications de position qui indiquent le point auquel l'installation de production d'énergie (7 à 11) correspondante est raccordée au réseau de distribution (1).

12. Procédé selon la revendication 11, **caractérisé en ce que** les données d'installation, dans le cas des installations de production d'énergie (7 à 11) sous la forme d'installations photovoltaïques, comprennent des indications supplémentaires à propos de la position géographique et/ou à propos de l'orientation du générateur photovoltaïque associé à l'installation photovoltaïque.

13. Procédé selon l'une des revendications précédentes, **caractérisé en ce que** les données d'interrogation et/ou les données d'installation ainsi que les réponses de données et/ou les instructions de commande converties sont reçues par la passerelle (14) par le biais de liaisons de données protégées et/ou sont envoyées aux unités de commande de système (15 à 18) et/ou aux installations de production d'énergie (7 à 11) définies.

14. Procédé selon l'une des revendications précédentes, **caractérisé en ce que** les données d'interrogation sont reçues de la part de différentes unités de commande de système (15 à 18) et les réponses de données leurs sont envoyées et/ou les données d'installation sont reçues de la part de différentes installations de production d'énergie (7 à 11) et les instructions de commande leur sont envoyées conformément à au moins deux protocoles de communication différents et/ou par le biais d'au moins deux ports de données séparés sur les unités de commande de système (15 à 18) et/ou les installations de production d'énergie (7 à 11).

15. Procédé selon l'une des revendications précédentes, **caractérisé en ce que** des instructions de commande autonomes sont générées par la passerelle (14) aux installations de production d'énergie (7 à 11) afin de poursuivre un objectif stocké dans la passerelle (14) et/ou un objectif global défini dans les données d'interrogation des unités de commande de système (15 à 18).

16. Serveur de données, lequel est configuré et programmé pour mettre en oeuvre le procédé selon l'une des revendications précédentes sous la forme d'une passerelle (14).
